# EUROPEAN PATENT APPLICATION

(11) **EP 2 026 541 A1**
(43) Date of publication of application: **18.02.2009**
(21) Application number: 08014545.1
(22) Date of filing: 14.08.2008
(51) Int. Cl.: H04M 1/02, H04M 1/04

(54) **Portable electronic device**

(30) Priority: 15.08.2007 TW 96130124
(71) Applicant: ASUSTeK Computer Inc., Peitou, Taipei City (TW)
(72) Inventor: Wu, Wen-Chih, Taipei City (TW); Chen, Yi-An, Taipei City (TW)
(74) Representative: Hager, Thomas Johannes

(57) **Abstract**

The invention provides a portable electronic device including a main body and a cover pivotally connected thereto. The main body comprises a first hole and a second hole formed on a lateral surface of the main body. When the cover rotates with respect to the main body to a first position, a nub of the cover engages in the first hole, such that the cover and the main body form a first angle. When the cover rotates with respect to the main body to a second position, the nub of the cover engages in the second positioning hole, such that the cover and the main body form a second angle.

## Description

### BACKGROUND OF THE INVENTION

### Field of the Invention

The invention relates in general to a portable electronic device and in particular to a portable electronic device with a positioning mechanism.

### Description of the Related Art

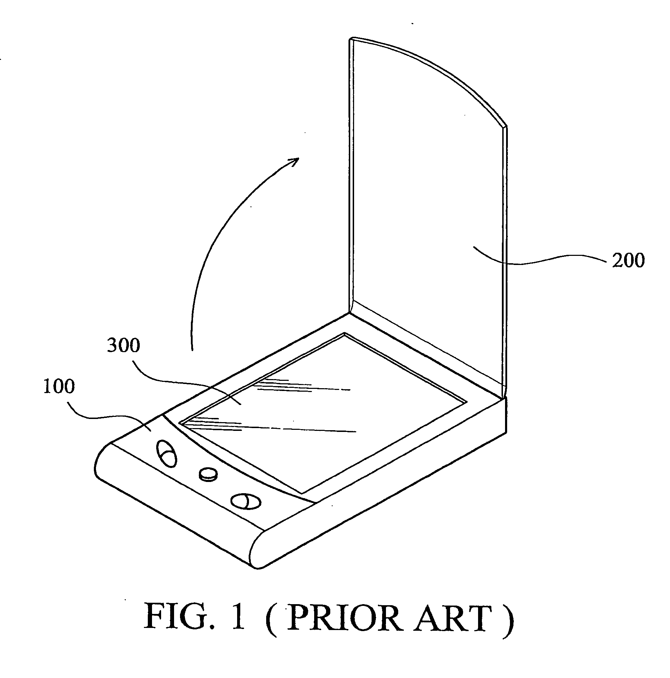

Referring to FIG. 1, a conventional portable electronic device, such as a mobile phone or PDA, primarily comprises a main body 100 and a cover 200 pivotally connected thereto. When using the portable electronic device, the cover 200 is unfolded as the arrow indicates in FIG. 1. When the portable electronic device is not in use, the cover 200 is collapsed to protect a display 300 on the main body 100. Generally, the electronic device can be hand-held or lie on a table for manual operation, but it cannot stand in an upright position.

### BRIEF SUMMARY OF INVENTION

The invention provides a portable electronic device including a main body and a cover pivotally connected thereto. The main body comprises a first hole and a second hole formed on a lateral surface of the main body. When the cover rotates with respect to the main body to a first position, a nub of the cover engages in the first hole, such that the cover and the main body form a first angle. When the cover rotates with respect to the main body to a second position, the nub of the cover engages in the second positioning hole, such that the cover and the main body form a second angle.

### BRIEF DESCRIPTION OF DRAWINGS

The invention can be more fully understood by reading the subsequent detailed description and examples with references made to the accompanying drawings, wherein:

FIG. 1 is a perspective diagram of a conventional portable electronic device;

FIGs. 2A and 2B are perspective diagrams of a portable electronic device in a closed state according to an embodiment of the invention;

FIG. 3 is a perspective diagram of a portable electronic device in an open state;

FIG. 4 is a large view of portion A in FIG. 3;

FIG. 5 is a perspective diagram of a portable electronic device in an upright state; and

FIG. 6 is a large view of portion B in FIG. 4.

### DETAILED DESCRIPTION OF INVENTION

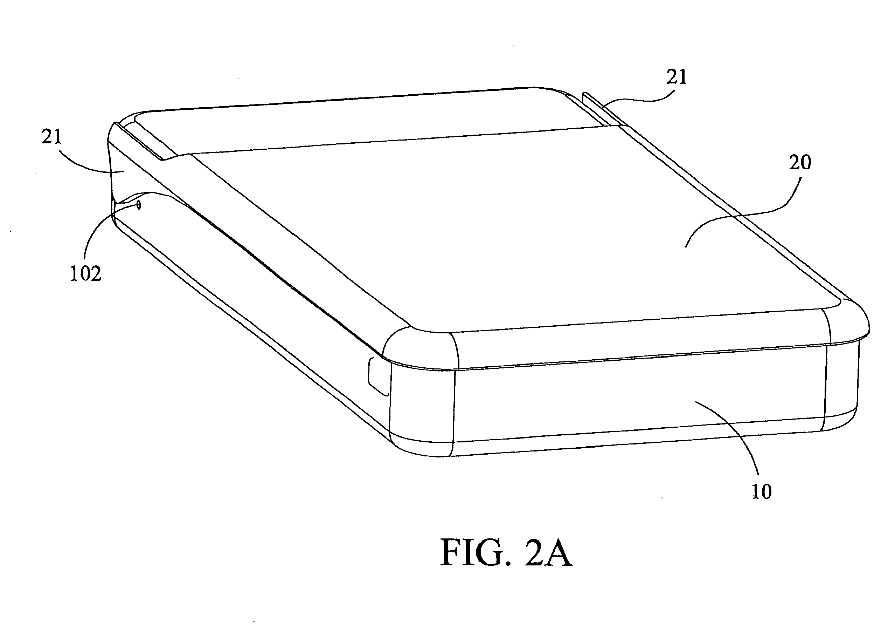

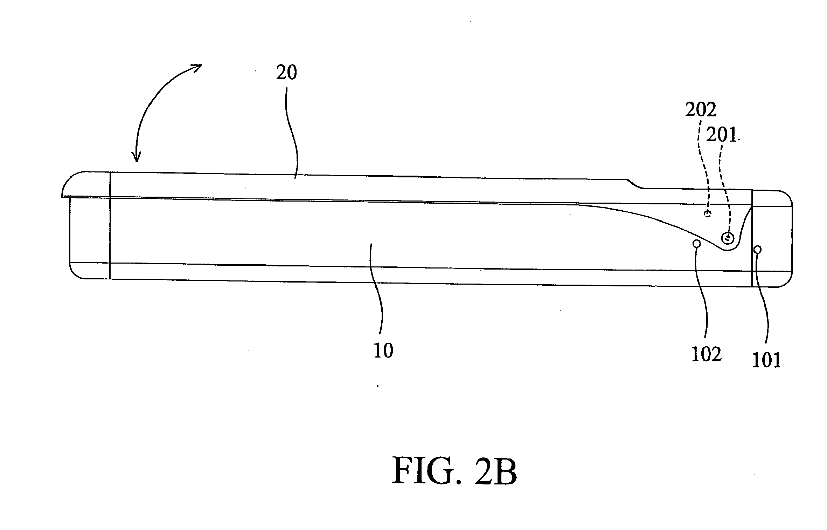

Referring to FIGs. 2A and 2B, portable electronic device according to an embodiment of the invention, such as a mobile phone or PDA, primarily comprises a main body 10 and a cover 20. The cover 20 comprises two extending portions 21 at opposite sides thereof. Each of the extending portions 21 has a pivot portion 201 formed on an inner surface thereof and pivotally connected to the main body 10, such that the cover 20 is rotatable with respect to the main body 10, as the arrows indicate in FIG. 2B.

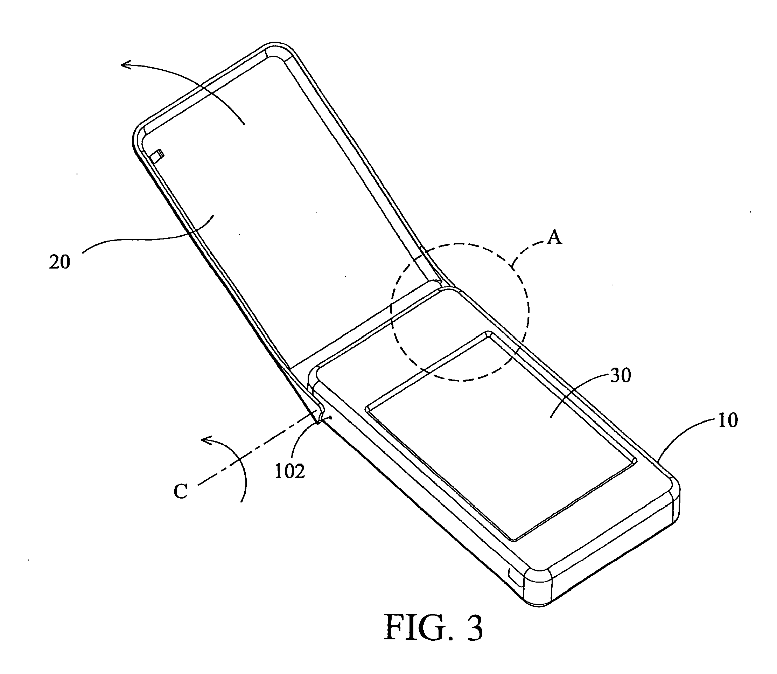

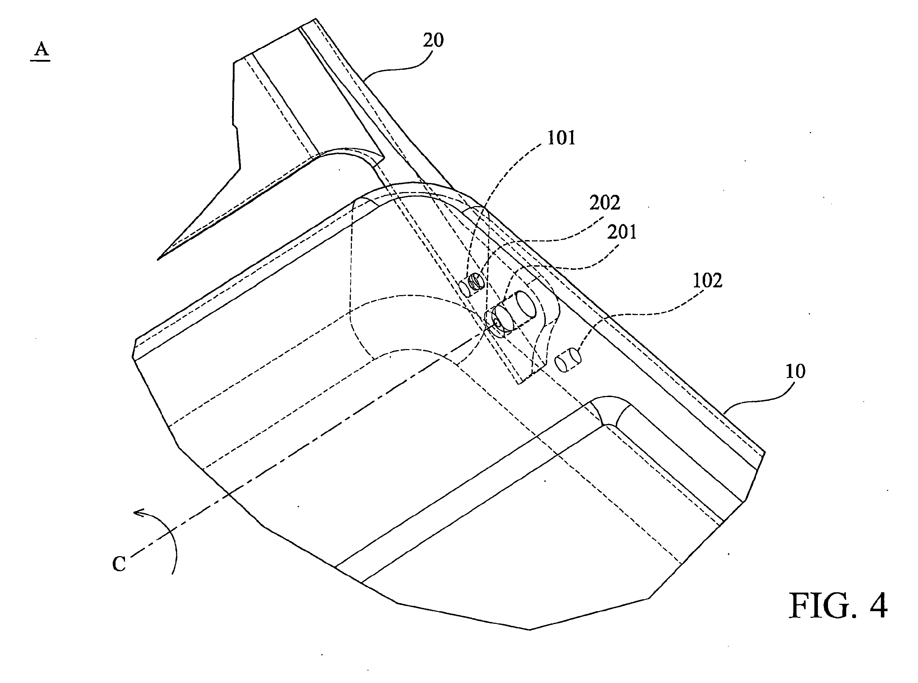

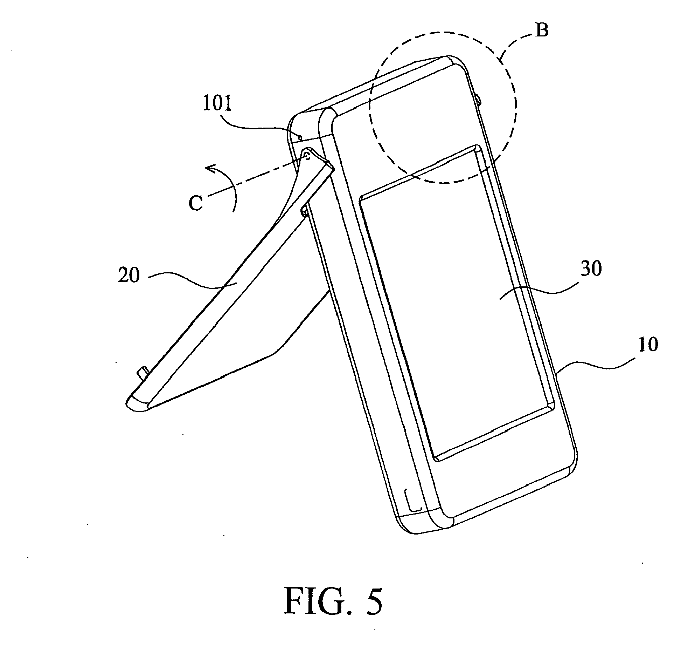

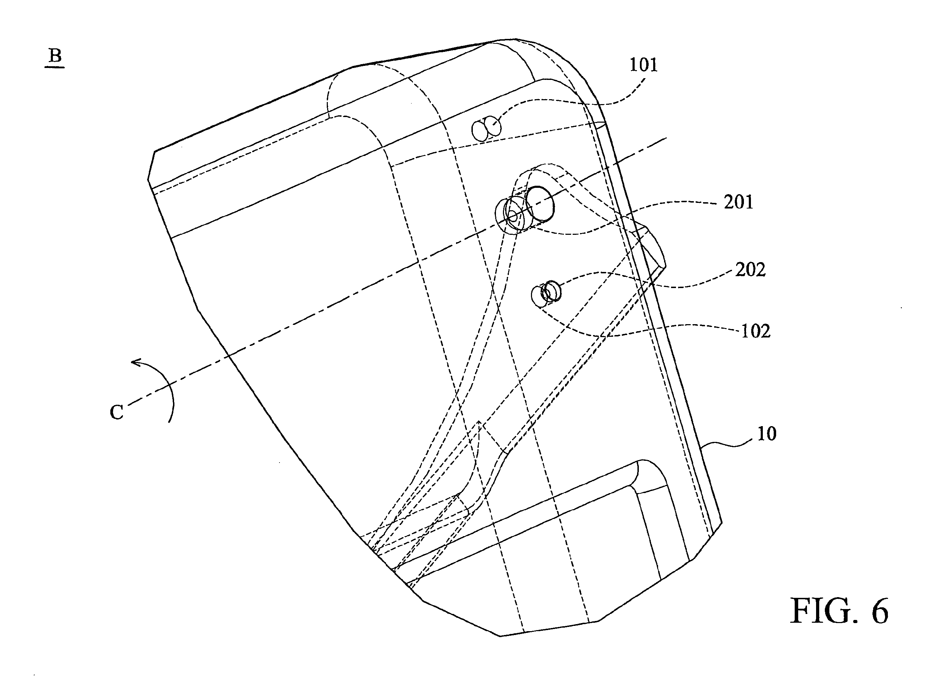

In this embodiment, the main body 10 has a first hole 101 a second hole 102 disposed on a lateral surface thereof. When the cover 20 is unfolded with respect to the main body 10 from a closed state (FIGs. 2A and 2B) to a first position (FIGs. 3 and 4), a nub 202 on the inner surface of the cover 20 engages in the first hole 101 of the main body 10, as shown in FIG. 4, thereby retaining the electronic device in an open state. Referring to FIG. 5 and 6, when the cover 20 rotates over the first position to a second position, the nub 202 engages in the second hole 102 to retain the electronic device in an upright state.

When operating the electronic device or watching a display 30 on the electronic device, the cover 20 is unfolded and held in the first position or the second position, such that the electronic device is retained in the open state or the upright state for convenient usage. However, when the electronic device is not in use, the cover 20 is folded with respect to the main body 10 to cover and protect the display 30, such that the electronic device returns to the closed state as shown in FIGs. 2A and 2B. In some embodiments, the cover 20 may comprise transparent or flexible plastic material.

FIG. 4 is a large view of portion A in FIG. 3. When the electronic device switches from the closed state to an open state, the cover 20 rotates around a central axis C of the pivot portion 20 to the first position, as shown in FIG. 4, wherein the nub 202 on the inner surface of the cover 20 engages in the first hole 101 of the main body 10, thereby holding the cover 20 in the first position and retaining the electronic device in the open state.

FIG. 6 is a large view of portion B in FIG. 5. When the cover rotates around the central axis C to the second position, the electronic device is switched to an upright state (FIG. 5), wherein the nub 202 of the cover 20 engages in the second hole 102 of the main body 10, as shown in FIG. 6, thereby retaining the cover 20 in the second position. When in the upright state, the main body 10 and the cover 20 form an inverted V-shaped structure to conveniently stand on a flat surface, such as a table, so that users can feel more comfortable when watching the display 30.

In this embodiment, the central axis C is substantially perpendicular to the lateral surface of the main body 10. Furthermore, when in the open state, the main body 10 and the cover 20 may have an angle of about 150°. When in the upright state, the main body 10 and the cover 20 may have an angle of about 300°. According to different mechanical and functional requirements, the main body 10 and the cover 20 may exhibit different angles by modifying positions and arrangement of the nub 202 and the first and second holes 101 and 102.

The invention provides a portable electronic device primarily comprising a main body 10 and a rotatable cover 20. The cover 20 comprises at least an extending portion 21 with a nub 201 formed on an inner surface thereof. The main body 10 comprises a first hole 101 and a second hole 102 on a lateral surface thereof, corresponding to the nub 201. The electronic device can be alternatively switched to an open state or an upright state for convenient usage. In some embodiments, the pivot portion 201 of the cover 20 may couple with a damper or resilient mechanism (such as torsion spring), thereby automatically impelling the cover 20 to the first or second position. In conclusion, the portable electronic device of the invention can improve convenience of usage with a simplified mechanism and low production cost.

While the invention has been described by way of example and in terms of preferred embodiment, it is to be understood that the invention is not limited thereto. To the contrary, it is intended to cover various modifications and similar arrangements (as would be apparent to those skilled in the art). Therefore, the scope of the appended claims should be accorded the broadest interpretation to encompass all such modifications and similar arrangements.

## Claims

1. A portable electronic device, **characterized by** comprising:
a main body (10), comprising a lateral surface, a first hole (101) and a second hole (102), wherein the first and second holes (101, 102) are disposed on the lateral surface; and
a cover (20), pivotally connecting the main body (10) and comprising a nub (202), wherein when the cover (20) rotates to a first position with respect to the main body (10), the nub is engaged in the first hole (101), such that the cover (20) and the main body (10) have a first angle,
wherein when the cover (20) rotates to a second position with respect to the main body (10), the nub (202) is engaged in the second hole (102), such that the cover (20) and the main body (10) have a second angle.

2. The portable electronic device as claimed in claim 1, **characterized in that** the first angle is substantially 150°.

3. The portable electronic device as claimed in claim 1, **characterized in that** the second angle is substantially 300°.

4. The portable electronic device as claimed in claim 1, **characterized in that** when the cover (20) rotates to the second position, the cover (20) and the main body (10) form an inverted V-shaped structure, such that the portable electronic device stands on a flat surface.

5. The portable electronic device as claimed in claim 1, **characterized in that** the portable electronic device further comprises a display (30) concealed by the cover (20) when in a closed state.

6. The portable electronic device as claimed in claim 1, **characterized in that** the cover (20) is transparent.

7. The portable electronic device as claimed in claim 1, **characterized in that** the cover (20) is flexible.

8. The portable electronic device as claimed in claim 1, **characterized in that** the cover (20) comprises plastic material.

9. The portable electronic device as claimed in claim 1, **characterized in that** the cover (20) further comprises an extending portion (21) with the nub (202) formed on an inner surface thereof.

10. The portable electronic device as claimed in claim 9, **characterized in that** the cover (20) further comprises a pivot portion (201) pivotally connected to the main body (10), and the pivot portion (201) has a central axis (C) substantially perpendicular to the lateral surface.

11. The portable electronic device as claimed in claim 1, **characterized in that** the portable electronic device is a mobile phone.

12. The portable electronic device as claimed in claim 1, **characterized in that** the portable electronic device is a PDA.
